# EUROPEAN PATENT SPECIFICATION

(11) **EP 0 868 037 B1**
(45) Date of publication and mention of the grant of the patent: **20.03.2002**
(21) Application number: 98301801.1
(22) Date of filing: 11.03.1998
(51) Int. Cl.: H04B 7/26

(54) **Method for transmitting alternative messages in a TDMA system with discontinuous transmission**
Verfahren zur Übertragung alternativer Nachrichten in einem TDMA-System mit diskontinuierlicher Übertragung
Méthode de transmission de messages alternatifs dans un système AMRT à transmission discontinue

(30) Priority: 21.03.1997 US 821479
(43) Date of publication of application: 30.09.1998
(73) Proprietor: LUCENT TECHNOLOGIES INC., Murray Hill, New Jersey 07974-0636 (US)
(72) Inventor: Kahn, Colin Leon, Cedar Knolls, New Jersey 07950 (US); Turner, Michael D., Madison, New Jersey 07940 (US)
(74) Representative: Buckley, Christopher Simon Thirsk

(56) References cited:
- WO-A-91/02436
- WO-A-96/33585
- GB-A- 2 290 198
- US-A- 5 581 548

## Description

This invention relates to methods for transmitting alternative messages in a time slot of a frame of a time division multiple access communications system.

In a TDMA (Time Division Multiple Access) system, communication channels between a base station and a mobile communication device are defined in terms of a frequency and time slot. Each communication channel is assigned to a frequency and one of multiple time slots transmitted on a given frequency. In the case of systems adhering to TIA (Telecommunications Industry Association) Standard IS-136.2, three time slots are associated with each frequency. As a result, three channels are assigned to each frequency.

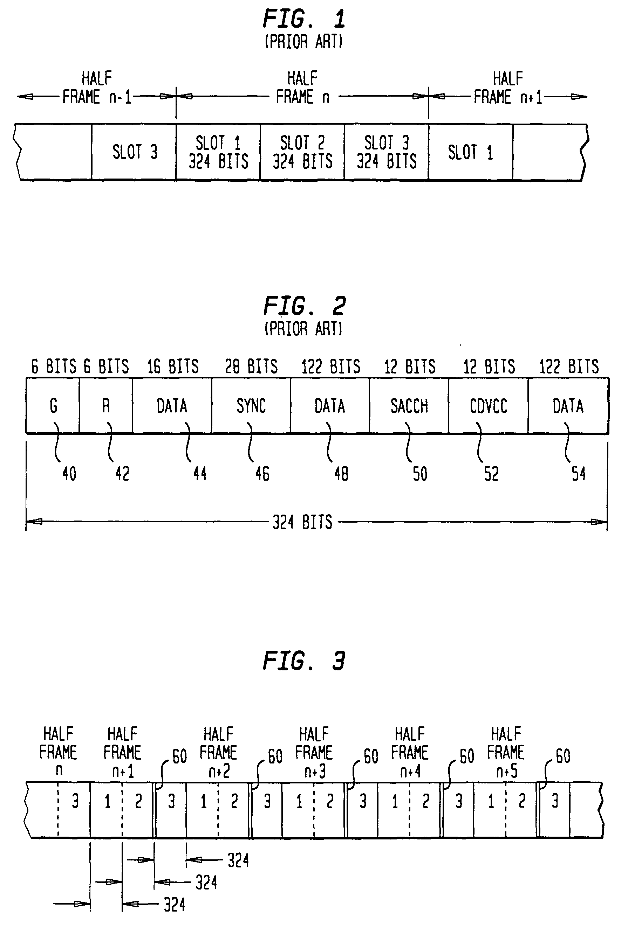

FIG. 1 illustrates an arrangement of time slots as defined by Standard IS-136.2. A sequence of frames is transmitted where each frame contains six time slots. Each time slot contains the data associated with a communication channel. The half-frames contain 60 milliseconds of information where each time slot contains 20 milliseconds of information. Each time slot contains 324 bits. As a result, for a given communication channel, 324 bits of information are transmitted each half-frame.

FIG. 2 illustrates the different fields associated with the 324 bits from one of the slots of FIG. 1. The fields are defined by Standard IS-136.2. Field 40 is labeled G and is used as a guard field between slots and contains 6 bits. Field 42 is a ramp field having 6 bits which are used to provide time for a mobile transmitter to reach full operating power after being off for the previous slots. DATA field 44 is 16 bits long and is used to transmit data. SYNC field 46 is 28 bits long and is used to transmit a synchronization pattern. DATA field 48 is 122 bits long and is used to transmit data. SACCH field 50 is 12 bits long and is used to transmit the SACCH message (Slow Associated Control Channel). This field is used to exchange signaling messages between the base station and mobile device. These signaling messages include information regarding the quality of the channel. CDVCC field 52 is 12 bits long and is used to transmit the CDVCC message (Coded Digital Verification Color Code). This channel is used to indicate that the base station and mobile device are exchanging proper data. DATA field 54 is 122 bits long and is used to transmit data. The data fields are typically used to carry information such as speech data. The Standard also permits replacing data fields 48 and 54 with a FACCH field (Fast Associated Control Channel) message. This message is used to exchange information between the mobile and base station in situations such as handoffs. It should be noted that during this time the voice data is blanked so that the signaling message may be passed between the mobile and base station.

Communications between a base station and a mobile communication device include messages containing data corresponding to speech. In many conversations, it is typical for moments of silence to occur. As a result, messages carried between the base station and mobile device are carrying data representative of silence. This is wasteful because mobile unit battery power is being used to transmit information representative of silence, and in addition, other channels are receiving interference from a channel that is only transmitting data indicative of silence.

One suggested solution to avoid wasting transmissions by sending data representative of silence or absence of voice is to stop transmitting in periods of silence except for transmissions containing information relating to channel quality. In a one second period of relative silence, only three transmissions rather than 50 transmissions would be sent. The three transmissions are in the 324 bit form of FIG. 2 and contain the channel quality information in DATA fields 44, 48, and 54. This solution offers the advantage of reducing co-channel interference and reducing battery drain at the mobile; however, it creates a problem for the party receiving the message. The party receiving the message will simply hear silence as opposed to background noise when no transmissions are made. This may make the users feel as if the call has been dropped when in reality it is simply a silence transmission.

A second suggested solution addresses this problem. Once again, a period of silence is detected using a voice activity detector, and transmission stops except for five transmissions per second. The five transmissions are in the 324 bit form of FIG. 2. Three of the five transmissions are used to transmit channel quality information in DATA fields 44, 48, and 54. The remaining two transmissions are used to transmit comfort noise information in same DATA fields. Comfort noise information is information representative of background noise that is transmitted to a receiver. The receiver uses the comfort noise information to generate background noise that a user may hear. As a result, in periods of silence a user still can hear background noise and therefore be assured that the communication channel has not been interrupted.

Both of these solutions suffer from the same problem. They both make it difficult for a base station to monitor channel quality when choosing an available channel for assignment to a new call. It should be noted that during a period of silence, the transmitter at the mobile is turned off for a large majority of the time (45 out of 50 possible transmission times). When the base station makes an interference measurement, it may get a false low interference reading based on a mobile that is temporarily not transmitting. As a result, the base station may assign a low quality channel to a new call.

In GB-A-2290198 link quality is monitored in a TDMA. When a detector senses a silent period due to the absence of speech signals from a microphone, a mobile station is caused to transmit back to the base station the last sync signal which was received from the base station and stored in a memory of the mobile, whereby the base station can still monitor link quality during silent periods.

US-A-5581548 relates to a frequency hopping TDMA system in which a mobile involved in a connection in one cell transmits a sequence of bursts relating to a particular connection so that all of them coincide on a radio channel with one burst in a sequence of bursts from one other mobile involved in an other connection in an adjacent cell. In other words, among a large number of bursts transmitted from one mobile station in one cell, not more than a small minority coincide on any radio channel with any burst among a large number of bursts transmitted from a different mobile station in an adjacent cell.

WO-A-9633585 relates to a battery-powered radio transceiver with improved battery life comprising a transmitter with a digital signal processor which is programmed to de-energize at least some of its components and to generate an artificial noise signal for transmission when speech is not being received by the microphone.

According to this invention there is provided a method as claimed in claim 1.

An embodiment for performing the invention solves the aforementioned problems by continuing to transmit in each time slot during periods of silence; however, the number of bits transmitted in the time slot is reduced to save battery power and to limit interference in other channels. The reduced number of bits are used to carry channel quality information and comfort noise information. As a result, this embodiment allows transmission of comfort noise during periods of silence and still allows an accurate measurement of interference when assigning a channel to a new call.

### Brief Description of the Drawings

FIG. illustrates a series of half-frames associated with a single frequency of a TDMA system;
FIG.2 illustrates the fields of one of the time slots of FIG. 1;
FIG.3 illustrates several half-frames with time slot 3 carrying a message associated with a period of silence;
FIG.4 illustrates the fields of an abbreviated message;
FIG.5 illustrates the fields of another abbreviated message format; and
FIG.6 illustrates several half-frames with time slot 3 carrying difference abbreviated messages.

### Detailed Description of the Invention

FIG. 3 illustrates a sequence of half-frames for a particular frequency in a TDMA system. Each half-frame is broken into three time slots where each slot is associated with a communication channel. If, for example, slots 1 and 2 are not transmitting periods of silence, the full 324 bits associated with the slot are transmitted. If the communication channel using time slot 3 is in a period of silence, only 80 bits of information are transmitted during the time slot. This is illustrated by shaded region 60 in each time slot 3. As a result, there remains only a small portion of time slot 3 used for actual transmission. During the remaining portion of time slot 3, no transmissions are present and as a result, power drain and co-channel interference are reduced. In this example, the width of shaded region 60 is only 80 bits. However, the width of region 60 may be increased or decreased by transmitting more bits or less bits, respectively.

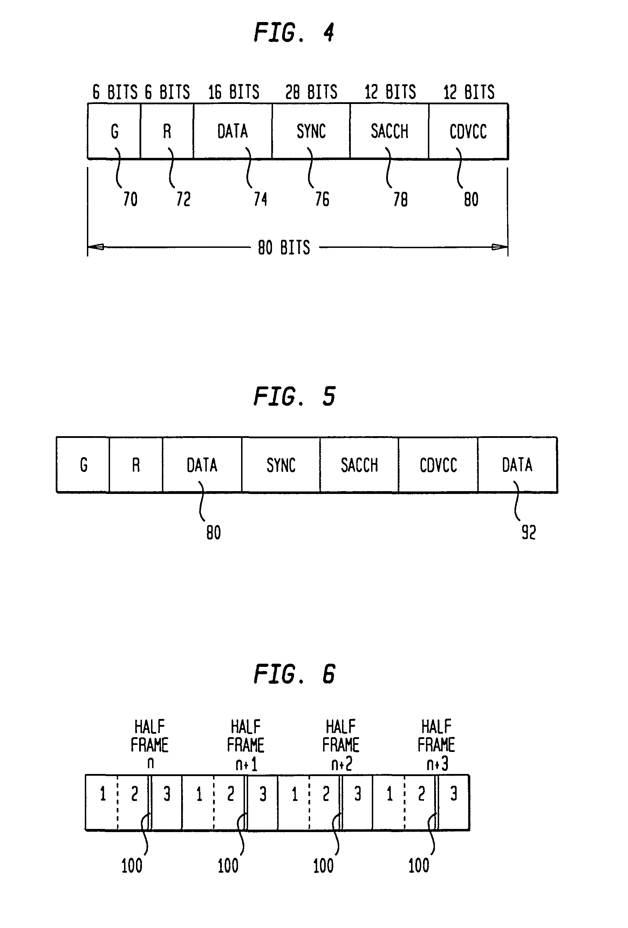

FIG. 4 illustrates the fields that are transmitted when periods of silence are detected. A time slot will still be 324 bits long, however, only 80 bits will be transmitted. This provides a reduction of power thereby increasing battery life and also reducing co-channel interference. When periods of silence are detected, the 80 bits of FIG. 4 are transmitted instead of 324 bits of FIG. 2. Once again, field 70 is a guard field of 6 bits and field 72 is a ramp field of 6 bits. Field 74 is a data field containing 16 bits and field 76 is a synchronization field containing 28 bits. Field 78 carries an SACCH message and is 12 bits long. Field 80 is 12 bits long and contains the CDVCC message. When silence or absence of voice is detected, either the mobile or base station transmits the 80 bit field and places the channel quality information in field 78 as an SACCH message and places the comfort noise in field 74. The 80 bits of FIG. 4 are transmitted in each time slot associated with the communication channel.

Since a transmission is made during each time slot associated with the communication channel, when co-channel interference is measured, the measurements are made using samples from the first part of the time slot so as to get an accurate measurement of interference.

It should be noted that the number of bits transmitted during a period of silence need not be limited to 80 bits and need not be limited to the fields specified in FIG. 4. For example, it is possible to vary the number of bits associated with each field or to add or subtract fields from those shown in FIG. 4. For example, FIG. 5 illustrates sending additional data field 92 after the CDVCC field. It is also possible to place comfort noise information in data field 90 of FIG. 5 while placing fax or modem data in data field 92. Recalling FIG. 4, it is also possible to transmit the comfort noise information in field 74 for a portion of the time and to send other types of data in data field 74 the rest of the time. For example, use of data field 74 may be used for different purposes in different half-frames. FIG. 6 illustrates half-frames N, N+1, N+2, and N+3. Each half-frame contains three time slots. In this example we are assuming the channel associated with time slot 3 is transmitting silence and therefore an abbreviated message is being transmitted in place of the usual longer message. This shortened amount of data or number of bits is indicated by shaded area 100. In half-frame N, comfort noise data may be transmitted in field 74. In half-frames N+1 additional comfort noise data may be transmitted while in half-frames N+2 and N+3 data associated with a fax, a modem, or e-mail may be transmitted. It is possible to transmit as few as 1 or 2 half-frames containing comfort noise per second while using the other half-frames to transmit other information. For example, two out of 50 half-frames per second may be used to transmit comfort noise while the remaining 48 half-frames may be used for transmitting other data.

## Claims

1. A method for transmitting alternative messages in a time slot of a frame of a time division multiple access communications system, the method including the steps of:
detecting an absence of voice;
substituting a first shorter format message for a longer format message in a time slot of a first frame when an absence of voice is detected;
substituting a second shorter format message for a longer message in the time slot of a second frame when an absence of voice is detected, the first shorter format message containing a different type of information from the second shorter format message;
transmitting in the time slot for a first period of time when substituting a shorter message, the first period of time being less than a second period of time, the second period of time being a transmission time in the time slot when the longer message is transmitted; and
continuing to substitute the shorter message for the longer message until voice is detected.

2. A method as claimed in claim 1, wherein the first shorter format message includes comfort noise information.

3. A method as claimed in claim 2, wherein the second shorter format message includes fax data.

4. A method as claimed in claim 2, wherein the second shorter format message includes modem data.

5. A method as claimed in claim 2, wherein the second shorter format message includes channel quality data.

6. A method as claimed in claim 2, wherein the second shorter format message includes channel quality data and comfort noise information.

## Patentansprüche

1. Verfahren zur Übertragung alternativer Nachrichten in einem Zeitschlitz eines Rahmens eines Kommunikationssystems mit Vielfachzugriff im Zeitmultiplex, mit folgenden Schritten:
Erkennen der Abwesenheit von Sprache;
Ersetzen einer Nachricht mit längerem Format durch eine erste Nachricht kürzeren Formats in einem Zeitschlitz eines ersten Rahmens, wenn die Abwesenheit von Sprache erkannt wird;
Ersetzen einer längeren Nachricht durch eine zweite Nachricht kürzeren Formats im Zeitschlitz eines zweiten Rahmens, wenn die Abwesenheit von Sprache erkannt wird, wobei die erste Nachricht kürzeren Formats eine andere Art von Information enthält als die zweite Nachricht kürzeren Formats;
Übertragen im Zeitschlitz für eine erste Zeitperiode beim Ersetzen einer kürzeren Nachricht, wobei die erste Zeitperiode kürzer ist als eine zweite Zeitperiode, wobei die zweite Zeitperiode eine Übertragungszeit im Zeitschlitz ist, wenn die längere Nachricht übertragen wird; und
Fortfahren mit dem Ersetzen der längeren Nachricht durch die kürzere Nachricht bis Sprache erkannt wird.

2. Verfahren nach Anspruch 1, wobei die erste Nachricht kürzeren Formats Komfortgeräuschinformationen enthält.

3. Verfahren nach Anspruch 2, wobei die zweite Nachricht kürzeren Formats Faxdaten enthält.

4. Verfahren nach Anspruch 2, wobei die zweite Nachricht kürzeren Formats Modemdaten enthält.

5. Verfahren nach Anspruch 2, wobei die zweite Nachricht kürzeren Formats Kanalgütedaten enthält.

6. Verfahren nach Anspruch 2, wobei die zweite Nachricht kürzeren Formats Kanalgütedaten und Komfortgeräuschinformationen enthält.

## Revendications

1. Procédé de transmission de messages alternés dans une tranche de temps d'une trame d'un système de communications à accès multiple par répartition temporelle, le procédé comportant les étapes de :
détection d'une absence de voix ;
substitution d'un premier message de format plus court à un message de format plus long dans une tranche de temps d'une première trame quand une absence de voix est détectée ;
substitution d'un deuxième message de format plus court à un message plus long dans la tranche de temps d'une deuxième trame quand une absence de voix est détectée, le premier message de format plus court contenant un type d'informations différent de celui du deuxième message de format plus court ;
transmission dans la tranche de temps pendant une première période de temps lors de la substitution d'un message plus court, la première période de temps étant inférieure à une deuxième période de temps, la deuxième période de temps étant un temps de transmission dans la tranche de temps quand le message plus long est transmis ; et
continuation de la substitution du message plus court au message plus long jusqu'à la détection de voix.

2. Procédé selon la revendication 1, dans lequel le premier message de format plus court comporte des informations de bruit d'attente.

3. Procédé selon la revendication 2, dans lequel le deuxième message de format plus court comporte des données de facsimilé.

4. Procédé selon la revendication 2, dans lequel le deuxième message de format plus court comporte des données de modem.

5. Procédé selon la revendication 2, dans lequel le deuxième message de format plus court comporte des données de qualité de voie.

6. Procédé selon la revendication 2, dans lequel le deuxième message de format plus court comporte des données de qualité de voie et des informations de bruit d'attente.
